# EUROPEAN PATENT APPLICATION

(11) **EP 1 431 787 A1**
(43) Date of publication of application: **23.06.2004**
(21) Application number: 02772877.3
(22) Date of filing: 20.09.2002
(51) Int. Cl.: G02B 6/42

(54) **OPTICAL TRANSMITTER/RECEIVER**

(30) Priority: 28.09.2001 JP 2001302006
(71) Applicant: Sony Corporation, Tokyo 141-0001 (JP)
(72) Inventor: YASUDA, Nobuyuki, c/o SONY CORPORATION, Tokyo 141-0001 (JP)
(74) Representative: Nicholls, Michael John
(86) International application number: PCT/JP2002/009714
(87) International publication number: WO 2003/029868

(57) **Abstract**

A plug 3 to which a plastic optical fiber (POF) having an end of a spherical face shape is connected to a receptacle 4. A transmitter-receiver 30 is fixed to the receptacle, and a light receiving element 8 and a light emitting element 9 are mounted in a back-to-back relationship on a substrates 13, 14 and 13a such that the axial line of the POF and the center axes of the light receiving element 8 and the light emitting element 9 may be substantially aligned with each other. Reception light 7 from the POF is condensed and received by the light receiving element 8 mounted on the POF side. Transmission light 5 from the light emitting element 9 mounted on the opposite side to the POF is reflected by a reflecting face 11a of a lower prism 10, passes through a light passing portion provided in the substrate and enters the POF. A baffle 16a is provided around the light receiving element 8 so that transmission reflection light 6 from the end face of the POF may not be introduced into the light receiving element 8 thereby to prevent crosstalk.

## Description

### Technical Field

This invention relates to a transmitter-receiver which effects bi-directional optical transmission by means of a single-core optical fiber which is used generally, and more particularly to a transmitter-receiver suitable where a plastic optical fiber having a convex spherical end face is used.

### Background Art

In recent years, as signal cables for use for connection of various electronic apparatus, not only electric signal cables conventionally known well but also, for example, optical signal cables which make use of light to effect information transmission and so forth are utilized.

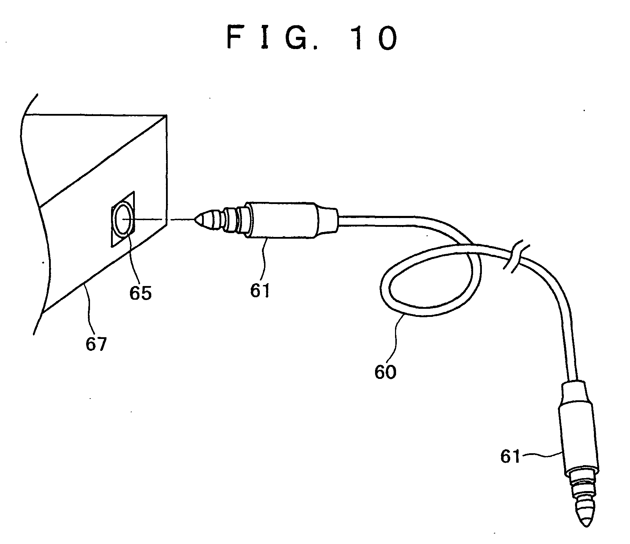

Where an optical cable is used to connect various electronic apparatus, in order to facilitate connection or disconnection between the apparatus, a plug is frequently attached to each of the opposite ends of an optical cable as shown in FIG. 10 and inserted into a jack provided on the apparatus side to establish a connection.

In the present example, a jack 65 is provided on an apparatus 67 side, and a plug 61 compatible with the jack is attached to each of the opposite ends of an optical cable 60.

If the plug 61 is inserted into a receiving hole of the jack 65, then the core wire (optical fiber strand) of the optical cable 60 is opposed to an optical element in the apparatus 67. The jack provided in the apparatus is often called receptacle. Further, a plug and a receptacle are generally called connector.

If a signal is transmitted only in one direction, then the optical element in the apparatus may be a light emitting element for transmission or a light receiving element for signal reception arranged on an axial line of the core of the optical fiber strand. An optimum arrangement can be obtained if the axial line of the optical fiber and the direction in which the light emitting element or the light receiving element exhibits a maximum efficiency are aligned with each other.

However, if it is attempted to use a single optical cable to transmit a signal in the opposite directions, then an optimum arrangement cannot be achieved readily as in the case described above.

Also a special optical cable which apparently has a form of a single optical cable is used frequently.

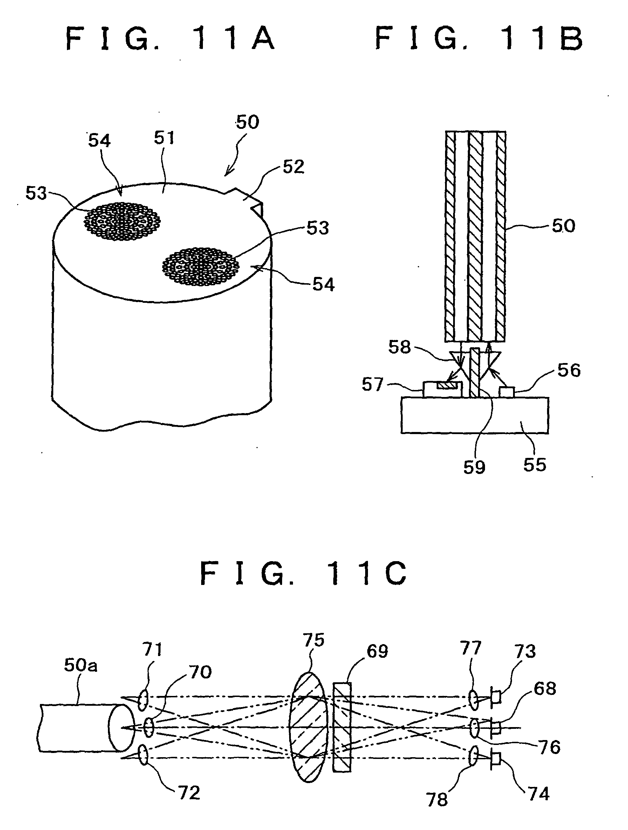

An example of such a special optical cable as just described is shown in FIG. 11A. First, a pair of domains 54 each formed from a plurality of cores 53 gathered together are prepared and are covered therearound with a clad 51. An identification projection 52 is formed on the clad 51 to form a single (multiple core) optical cable 50.

On the receptacle side, as shown in FIG. 11B, an light emitting element 56 and a light receiving element 57 are mounted on a substrate 55, and a prism 58 split at a central portion thereof with a partition plate 59 is fixed between the light emitting element 56 and the light receiving element 57.

A pair of plugs are attached to the opposite ends of the (multiple core) optical cable 50 such that, when each of the plugs is inserted into the receptacle, the substrate 55 and the optical cable 50 keep such a positional relationship as shown in FIG. 11B by means of the identification projection 52 and a turning preventing structure of the plug (for example, the plug has an angular shape or the like).

The domain 54 on the left side in FIG. 11B is used as the incoming side domain while the domain 54 on the right side is used as the outgoing side domain. Thus, substantially two optical fibers are used and a special optical cable is required, and since the cost is likely to become high and also the weight per unit length of the cable increases, the cable is not preferable.

In FIG. 11C, a holographic beam splitter is used so that bi-directional signal transmission can be achieved using a single-core optical fiber.

A single divergent light beam emitted from a laser diode 68 serving as a light emitting element arranged on an axial line of a (single-core) optical fiber 50a is split into beams 70, 71 and 72 by a holographic beam splitter 69 and a lens 75, and the beam 70 is condensed at one end of the optical fiber 50a.

Signal light coming in from the optical fiber 50a is diffracted into beams 76, 77 and 78 by the holographic beam splitter 69 and the lens 75, and the beams 77 and 78 are received by photo-detectors (light receiving elements) 73 and 74.

Although the system described above is superior also in terms of the stability against vibration of the plug and the receptacle, the holographic beam splitter is high in price and does not have a very high transmission efficiency.

Since the distance between the light emitting element and the right receiving element is as small as approximately 1 mm from the configuration of the system, also a problem of crosstalk occurs.

In the case of a plastic optical fiber (hereinafter referred to simply as POF) used very often for connection between electronic apparatus, since it has a comparatively great core diameter, use of a special multiple-core cable or optical element can be avoided by a system wherein a single-core POF and the receptacle of FIG. 11B are combined.

An ordinary optical fiber can be used as it is, and only if a turning preventing countermeasure for a plug is provided, also the route for transmission and reception is not disturbed. Further, a sufficient distance can be provided between the light emitting element and the light receiving element. Furthermore, as the splitting method, not only the prism having the partition plate shown in FIG. 11B but also such optical means as a mirror, a lens, a light introducing fiber, light interception and so forth can be used. Further, they can be selectively used in accordance with an object.

As described above, where a plastic optical fiber is used, if different halves of the core of the single-core POF having a semicircular cross section are used separately for transmission and reception by means of the single-core POF and a prism, advantageously the cost is low.

In particular, in a transmitter-receiver wherein bi-directional optical signals are normally transmitted by means of a single (single-core) optical fiber, conventionally an end face of the optical fiber is divided into different regions for transmission incoming light and reception outgoing light by optical means to isolate the transmission light and the reception light from each other to prevent mixture or interference of them readily.

However, where such region division as described above is used, since the distribution of light is asymmetrical with respect to the axial line of the optical fiber, mechanical variation or vibration of the connection position of an optical fiber connector has an influence on the intensity of transmission and reception lights. Also variation or vibration of the shape or posture of the optical cable similarly has an influence on the intensity of transmission and reception lights. They all have an influence on the transmission characteristic of the signal, and particularly the variation or the vibration of the shape or posture of the optical cable in the proximity of the connector has a significant influence. This gives rise to a problem that deterioration of the sound quality is invited in signal transmission between audio apparatus of high performances.

Further, there is a problem also in that, if the line across which transmission and reception are partitioned does not coincide but is different between the opposite ends of a single optical cable (the lines corresponding to the chords of the semicircle shapes at the opposite ends define a certain angle) due to an error in assembly, then this gives rise to deterioration of the transmission characteristic, and besides, if the angle is varied in time series by variation of the external force, then the variation particularly of the sound quality appears conspicuously.

### Disclosure of Invention

In order to solve such problems as described above., according to the present invention, there is provided an optical transmitter-receiver which includes a light receiving element for receiving reception light emitted from a single-core plastic optical fiber, a light emitting element for emitting transmission light, a substrate on which the light reception section and the light emission section are mounted, and light path changing means formed on the substrate for changing a route of the transmission light so that the transmission light may be introduced into the plastic optical fiber, and which is arranged in the proximity of a receptacle for holding, when a connector plug attached to an end portion of the plastic optical fiber is inserted into the receptacle, the connector plug at a predetermined position, wherein the axial line of the plastic optical fiber, an axis of the light reception section and an apparent light emitting source of the transmission light are arranged on the same straight line, and both of an intensity distribution when the transmission light enters the plastic optical fiber and a light reception sensitivity distribution of the light receiving element are symmetrical with respect to a point provided by a point on an axial line of the plastic optical fiber.

Further, the optical transmitter-receiver of the present invention is configured such that the intensity distribution of the transmission light is made greater at an outer peripheral portion than at a central portion of the plastic optical fiber by the light path changing means, or the light path changing means is a reflecting face provided on a transparent prism.

Further, a baffle is provided on a light path of the reception light and around the light receiving element.

Further, the plastic optical fiber has a spherical end face, or a lens system is inserted on a light path of the reception light between an end face of the plastic optical fiber and the light receiving element for converging a flux of light.

Further, the present invention provides also a method wherein the transmission light emitted from the light emitting element is introduced by a plurality of light introducing fibers.

Furthermore, conductors of the substrate on which the light emitting element and the light receiving element are mounted are electrically isolated from each other.

Further, the present invention provides also an optical transmitter-receiver wherein conductors on which the light emitting element and the light receiving element form a light passing window through which the transmission light passes.

Further, the present invention provides also an optical transmitter-receiver wherein the insulating substrate inserted between the conductors has a transmission window through which the transmission light passes.

Further, the present invention provides also an optical transmitter-receiver wherein an axis of the light emission section is arranged on the same straight line which passes the axial line of the plastic optical fiber and an axis of the light reception section.

Where the light emitting element is a semiconductor laser, a 45° prism is arranged on the same straight line as the axial line of the plastic optical fiber and an axis of the light receiving element such that an apparent light emitting source of the light path of the transmission light after the transmission light enters the 45° prism is arranged on the same straight line which passes the axial line of the plastic optical fiber and the axis of the light receiving element.

Further, aspect ratio changing means is interposed in the light path of the transmission light between a semiconductor laser and the 45° prism.

### Brief Description of the Drawings

FIG. 1 is an explanatory view in the form of an exploded perspective view showing a configuration shown in FIGS. 2A and 2B which is an example of an embodiment of the present invention;
FIGS. 2A and 2B are sectional views showing the example of the embodiment of the present invention;
FIG. 3 is an explanatory view in the form of an exploded perspective view showing a configuration shown in FIGS. 4A and 4B which is a different example of the embodiment of the present invention;
FIGS. 4A and 4B are sectional views showing the different example of the embodiment of the present invention;
FIGS. 5A to 5F are schematic views showing examples of the structure of a beam lead and an insulating substrate on which a light emitting element and a light receiving element are mounted, and wherein FIGS. 5A to 5C show a configuration of the example shown in FIG. 1 wherein a transparent plate is used for the insulating substrate and FIGS. 5D to 5F show a configuration of the example shown in FIG. 3 wherein a window through which light passes is perforated in the insulating substrate;
FIGS. 6A and 6B are sectional views showing an example of the embodiment of the present invention wherein a light introducing fiber is used for the transmission side;
FIGS. 7A to 7C are sectional views showing an example of the embodiment of the present invention wherein a laser light emitting element is used for the transmission side;
FIGS. 8A and 8B are sectional views showing another example of the embodiment of the present invention wherein a laser light emitting element is used for the transmission side;
FIGS. 9A and 9B are sectional views showing an example of the embodiment of the present invention wherein a combination of a laser light emitting element and a light introducing fiber is used;
FIG. 10 is an appearance view wherein a pair of plugs are connected to the opposite ends of a plastic optical fiber; and
FIGS. 11A to 11C show configurations of a conventional bi-directional optical fiber, and wherein FIGS. 11A and 11B show an example wherein two cores are arranged in the same clad and FIG. 11C shows an example wherein a two-split type light guide is used.

### Best Mode for Carrying out the Invention

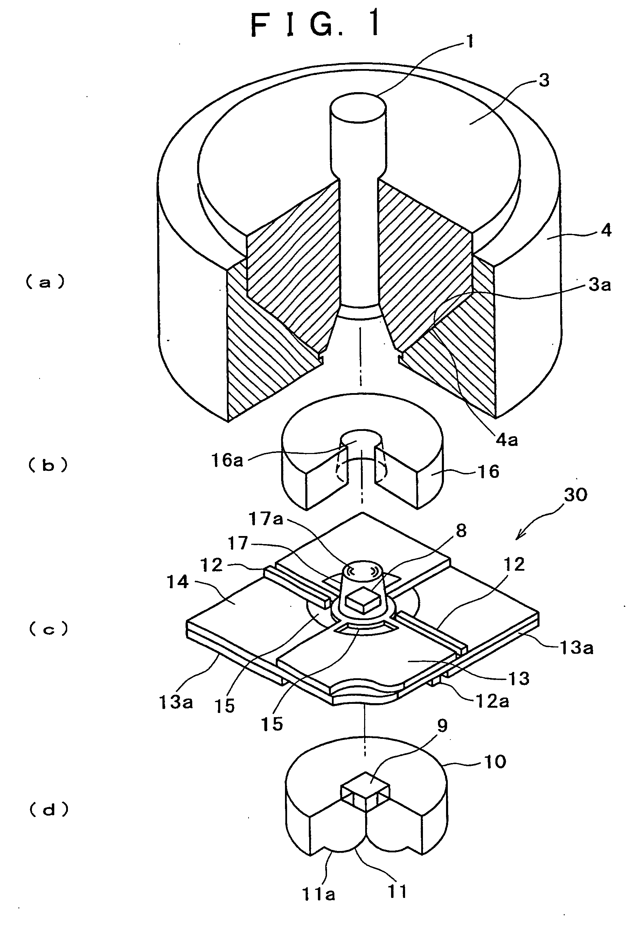

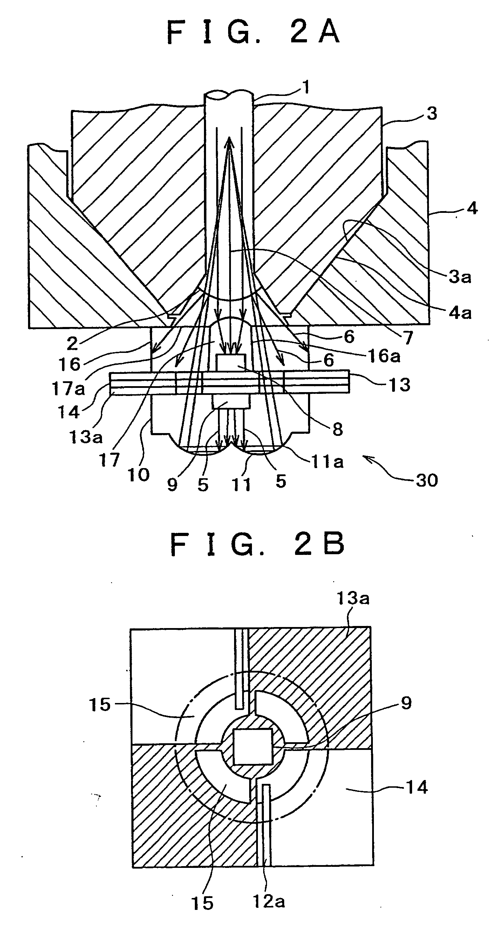

An embodiment of the present invention is described with reference to FIGS. 1 and 2A to 2B. FIG. 1 shows, in an exploded perspective view, an end portion of a plug inserted in a receptacle and an optical transmitter-receiver (hereinafter referred to as transmitter-receiver)., FIG. 2A is a sectional view taken along a plane including an axial line of a POF, and FIG. 2B is a projection view when a substrate on which the elements are mounted is viewed from a lower portion (the side of a light emitting element 9). In FIG. 1, several parts are partly broken to show sectional shapes thereof.

It is to be noted that the exploded perspective view of FIG. 1 is for illustration of names of parts and shapes of the parts, and in an actual working process, the parts are in most cases manufactured without being divided in this manner. As hereinafter described, in an actual manufacturing process, such consideration is taken that parts are integrated so that, for example, the number of contacting faces of parts may be decreased as far as possible in a route of light.

An optical fiber (POF) 1 is fixed at a central portion of a connector plug 3, and an end face 2 thereof is formed in a substantially spherical shape. Here, the POF is a plastic optical fiber (strand) which includes a single core whose end face is formed in a substantially convex spherical face. Usually, the POF is used as an optical cable having a protective layer provided on an outer periphery thereof.

If the plug 3 is inserted into a hole portion of a receptacle 4, then an (outer) tapered face 3a at an end portion of the plug 3 and an (inner) tapered face 4a at the most interior portion of the hole portion of the receptacle 4 are brought into contact with each other, whereupon the axial line of the POF is positioned at a predetermined position of the receptacle 4.

A transmitter-receiver 30 is attached to the receptacle 4. The transmitter-receiver 30 includes a light receiving element 8 and a light emitting element 9 and a substrate on which the light receiving element 8 and the light emitting element 9 are mounted, a prism arrangement for introducing transmission light 5 and reception light 7, encapsulation sections for encapsulating the light receiving element 8 and the light emitting element 9 therein, and so forth. The prism may serve also as the encapsulation member.

In the present specification, for the convenience of description, the substrate described above is regarded as a boundary, and the light receiving element 8, the encapsulation section for the light receiving element 8 for introducing the reception light 7 and so forth above the boundary are referred to as receiving section while the light emitting element 9 and the prism arrangement for introducing the transmission light 5 below the boundary are referred to as light emission section.

The light receiving element 8 is formed from, for example, a photodiode or a phototransistor.

The light receiving element 8 is mounted on a beam lead GND 13 such that the highest sensitivity axis thereof is aligned with the axial line of the POF (at the plug portion) so that the light receiving element 8 may receive the reception light 7 going out from the POF efficiently, and is connected to the outside through beam leads 12. The light receiving element 8 is encapsulated with a transparent encapsulation section 17, and a face of the encapsulation section 17 opposing to the POF forms a lens face 17a.

It is to be noted that, while it is described in the present specification that the light receiving element 8 and the light emitting element 9 are mounted on a lead frame and encapsulated, general goods on the market accommodated in a case may otherwise be used.

An LED is used as the light emitting element, and is mounted on a beam lead GND 13a and connected to the outside through the beam leads 12a. Upon molding of a lower prism 10, the LED is encapsulated in the lower prism 10.

The light emitting element 9 is arranged substantially on the rear side of the light receiving element 8, and the transmission light 5 goes out to the opposite side to the POF. The transmission light 5 is directed upwardly by the lower prism 10 and enters the lens-shaped end face 2 of the POF 1. Here, a member for changing the route of light (particularly transmission light) by reflection, refraction or the like is called light path changing means. The light path changing means may be provided on the opposite side of the substrate to the light emitting section.

The transmission light 5 from the light emission section changes its direction by approximately 180° by the light path changing means, and light emission of the transmission light 5 when the transmission light 5 enters the POF is performed by the same face side of the substrate (same as the side on which the light reception section is arranged).

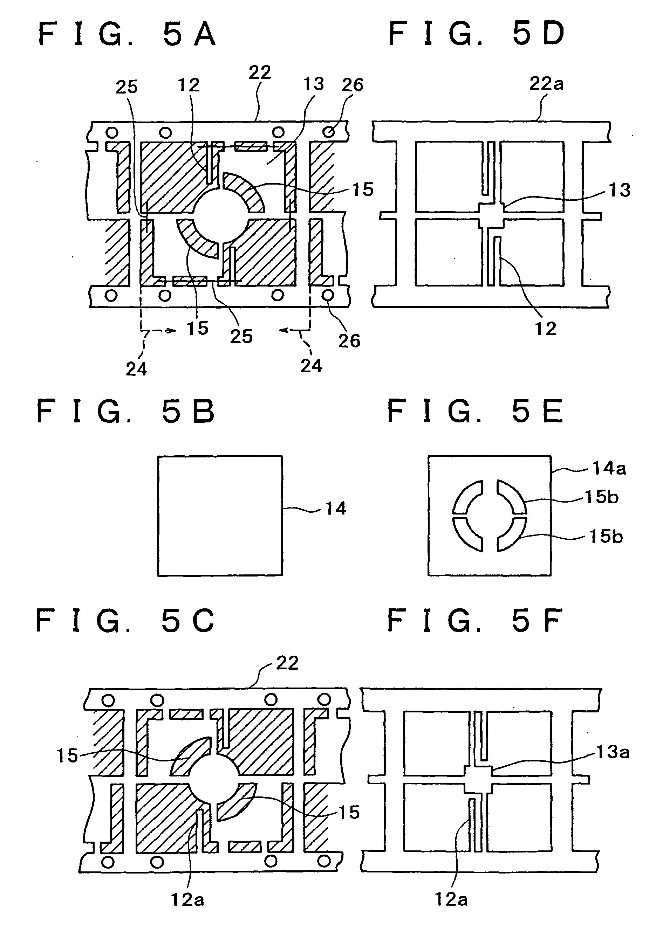

Here, a substrate assembly on which the light receiving element 8 and the light emitting element 9 are mounted is described with reference to FIGS. 5A to 5C. FIG. 5A schematically shows a lead frame 22 on which the light receiving element 8 is mounted, FIG. 5C schematically shows another lead frame 22 (element same as the light receiving element mounting lead frame) on which the light emitting element 9 is mounted, and FIG. 5B schematically shows an insulating substrate 14 which is inserted between the two lead frames.

The lead frame 22 shown in FIG. 5A is formed from a thin metal plate pierced at portions thereof indicated by slanting lines by presswork, and a large number of such shapes as a shape within a range indicated by arrow marks of broken lines 24 are formed successively and repetitively in the leftward and rightward directions.

The lead frame 22 is formed in such a shape that beam leads 12 and the beam lead GNDs 13 are connected to an outer peripheral portion, and at a final step, the lead frame 22 is cut along solid lines 25, 2.5, ... to separate the beam leads 12 and the beam lead GNDs 13.

A plurality of pilot holes 26 are perforated simultaneously on the outer peripheral portion, and pilot pins are inserted into the pilot holes 26 to position the lead frame 22 at each step.

The light receiving element 8 is mounted such that the highest sensitivity axis of the element is positioned at the center of the circular shape at the central portion, and is connected to the beam leads 12 by wiring bonding.

Also the light emitting element 9 is mounted on another lead frame 22. Also the light emitting element 9 is mounted on the side of the lead frame 22 which is shown in FIG. 5A.

The light receiving element and the light emitting element are positioned making use of the pilot holes such that the highest intensity axes thereof may be aligned with each other across the thin insulating substrate 14 such as a transparent resin plate or the like on the rear faces to the mounting faces of the light receiving element and the light emitting element, and are joined together, for example, by adhesion.

Since the pilot holes 26 are formed such that, even if one of the lead frames is placed upside down, the coordinates of the lead frames coincide with each other, working also at later steps is performed with two lead frames placed one on the other.

Further, light passing portions 15 pierced in the lead frame 22 are combined with regard to two lead frames such that a substantially ring-shaped light passing portion is formed from four sectoral shapes as shown in FIGS. 1 to 2B.

The later manufacturing process of the transmitter-receiver 30 where the transparent insulating substrate 14 is used is substantially such as described below.

The light receiving element 8 is encapsulated. The encapsulation section 17 of transparent resin is formed, for example, by outsert molding. The opposing face of the encapsulation section 17 to the POF may be formed in a convex lens shape. A baffle 16a is formed on an outer cylindrical face of the encapsulation section 17. The baffle 16a may be formed with a face having a light intercepting effect by painting, printing or the like, or a cylindrical baffle of a metal material or the like may be arranged along the outer cylindrical face of the encapsulation section 17 and secured upon molding of the lower prism 10 and a spacer 16 at the next step. If the spacer 16 is formed separately and fitted on the encapsulation section 17, then also it is possible to form the baffle 16a on the inner face of the spacer 16.

Generally, the lower prism 10 and the spacer 16 are formed at the same time by outsert molding. If it is not desirable that the transparent insulating substrate 14 is interposed in the light path of the transmission side, then an insulating substrate 14a having transmission windows perforated therein may be used to integrate the lower prism 10 and the spacer 16 so that the contact faces of the different members along the light path of the transmission side are removed.

A prism reflecting face 11 and a second prism reflecting face 11a of the lower prism 10 may be formed, for example, as deposited faces or plated faces of metal, and if total reflection can be anticipated, then the glossy faces in a molded state may be used as they are.

After all steps are completed, if the outer periphery of the lead frame is cut, then the beam leads 12 or 12a and the beam lead GNDs 13 or 13a are separated from each other.

While an example is described above with reference to FIGS. 1, 2A to 2B and 5A to 5C, various modifications are possible. For example, where potential isolation of the light emitting element and the light receiving element is not required very much, it is possible to mount both of the light emitting and receiving elements in a back-to-back relationship on the opposite faces of one lead frame.

Further, also it is useful to suitably provide a land for mounting a peripheral electronic part on the lead frame, and also it is a possible idea to provide holes and so forth for attaching the transmitter-receiver 30 to a receptacle or a receptacle case in the lead frame and the insulating substrate.

In the transmitter-receiver manufactured in this manner, the reception light 7 emitted from the POF is converged by the spherical face portion of the POF end face 2 and the lens face 17a of the encapsulation section 17 and received efficiently by the light receiving element 8 as shown in FIGS. 2A to 2B.

On the other hand, the transmission light 5 emitted from the light emitting element 9 (downwardly in the figure) is reflected by the conical prism reflecting face 11 formed at a central portion of the lower prism 10 and having a concave curved face so that it is emitted substantially horizontally and uniformly in all circumferential directions.

Further, the transmission light 5 is reflected by the second prism reflecting face 11a having a parabolic shape and changes its advancing direction to the upward direction, and then passes through the ring-shaped light passing portions 15 formed in the transparent insulating substrate 14, whereafter it passes through the spacer 16 and enters into the POF through the outer periphery of the lens-shaped end face 2 of the POF (in a substantially ring-like configuration over the overall circumference). In other words, a flux of light uniformly distributed point-symmetrically with the axial line of the POF is introduced into the POF.

Although very small part of the transmission light 5 changes its advancing direction due to diffusion and so forth in the inside of the spacer 16, it is intercepted by the baffle 16a and does not have an influence on the light receiving element 8.

Further, while the transmission light 5 is somewhat reflected also by the lens-shaped end face 2 of the POF, transmission reflection light 6 from the face is most reflected by the outer periphery and is further intercepted also by the baffle 16a, and consequently does not reach the light receiving element 8.

Here, where the direction in which the highest reception sensitivity is exhibited is referred to as axis of the light receiving element and the direction in which the highest light emission luminous intensity is exhibited is referred to as axis of the light emitting element, by aligning the axial line of the POF, the axis of the light receiving element and the axis of the light emitting element with each other and keeping the sensitivity of the light receiving element at the highest level and besides condensing a flux of light emitted from the light emitting element in a ring-like distribution by means of a prism such that the transmission light distributed symmetrically with respect to a point provided by the axial line of the POF (so that the intensity on one concentric circle may be equal) is introduced into the POF through the outer periphery of the POF, it is possible to achieve precise protection by means of a baffle or the like and prevent crosstalk between transmission and reception.

Similarly, from within the reception light 7 emitted from the end face 2 of the POF 1, principally the reception light rather near to the center of the POF is introduced into the light receiving element. From the reception light sensitivity distribution of the light receiving element, the reception light emitted from the axial line of the POF is received with the highest sensitivity. It is considered that also the intensity distribution of the reception light is distributed in a point-symmetrical relationship with the axial line of the POF.

Further, since the intensity distributions of both of the reception light and the transmission light are distributed in a point-symmetrical relationship with the axis line of the POF, even if the optical fiber is turned around the axial line thereof, the relationship between the optical fiber and the transmitter and receiver does not vary.

In other words, even if a plug to which the optical fiber is fixed and a receptacle can turn relative to each other, if the geometrical relative positions thereof are restricted by tapered faces of them, then basically the transmission characteristic does not vary. As a result, it is not necessary to take the directionality of the plug into consideration, and therefore, it is simple and convenient to mount the plug. Further, the connectors can be worked simply and readily in that the plug can be worked from a round bar while the receiving hole of the receptacle can be worked as a round hole, and there are merits in improvement in convenience in handling and reduction of the production cost.

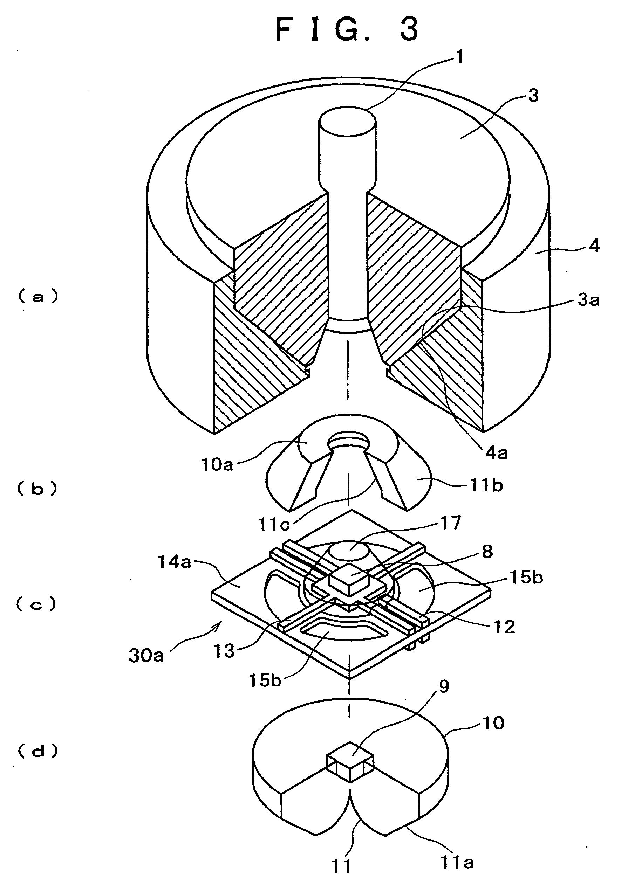

A transmitter-receiver 30a of another embodiment of the present invention is described with reference to FIGS. 3, 4A to 4B and 5D to 5F.

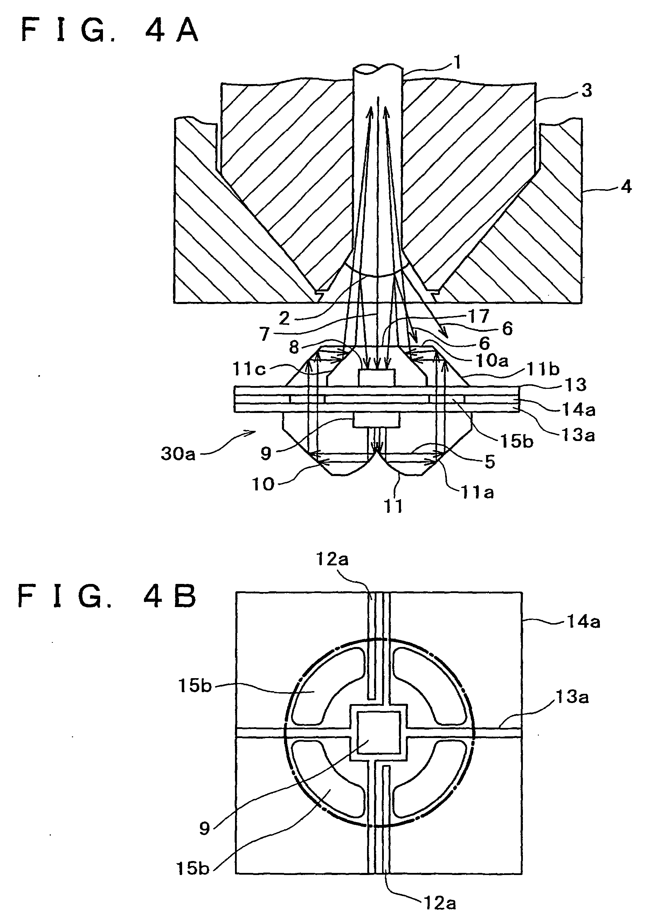

Similarly to the preceding example, FIG. 3 shows, in an exploded perspective view, an end portion of a plug inserted in a receptacle and transmission and reception sections, FIG. 4A is a sectional view taken along a plane including an axial line of a POF, and FIG. 4B is a projection view showing a substrate with elements mounted thereon as viewed from a lower portion (the side of a light emitting element 9), and some parts are partly broken to show sectional shapes thereof. As described hereinabove, the parts are less likely to be produced divisionally as shown in the exploded view of FIG. 3.

An optical fiber (POF of a single core) 1 is fixed to a central portion of a connector plug 3 and an (outer) tapered face 3a at an end of the plug and an (inner) tapered face 4a at the most interior portion of a hole portion of the receptacle 4 are contacted with each other to position the axial line of the POF at a predetermined position of a receptacle 4 similarly as in the preceding example.

The transmitter-receiver 30a is attached in the proximity and rearwardly of the receptacle 4. The transmitter-receiver 30a includes a light receiving element 8 and a light emitting element 9 and a substrate having the light receiving element 8 and the light emitting element 9 mounted on the front and the back thereof, a lower prism 10 for introduction of transmission light 5 and encapsulation of the light emitting element 9 therein, an upper prism 10a, and so forth.

The light receiving element 8 is formed from a photodiode, a phototransistor or the like similarly as in the preceding example.

The light receiving element 8 is mounted on a beam lead GND 13 such that the highest sensitivity axis thereof coincides with the axial line of the POF so that the light receiving element 8 may receive reception light 7 emitted from the POF efficiently, and is connected to the outside through beam leads 12. The light receiving element 8 is encapsulated in a transparent encapsulation section 17 substantially similarly as in the preceding example.

An LED is used for the light emitting element.

A substrate assembly on which the light receiving element 8 and the light emitting element 9 are mounted is described with reference to FIGS. 5D to 5F. FIG. 5D schematically shows a lead frame 22a on which the light receiving element 8 is mounted, FIG. 5F schematically shows another lead frame 22a on which the light emitting element 9 is mounted, and FIG. 5E schematically shows an opaque insulating substrate 14a with passing windows 15b inserted between the two lead frames.

The lead frame 22a shown in FIG. 5D is formed by piercing a thin metal plate by presswork such that the beam leads 12 and 12a and the beam lead GNDs 13 and 13a are connected to an outer periphery, and a great number of elements of the same shape are formed repetitively and successively in the leftward and rightward directions. Further, a plurality of pilot holes 26 are perforated in the outer periphery similarly as described hereinabove.

The light receiving element 8 or the light emitting element 9 is mounted such that the axis of the element may be positioned at the center of the square at a central portion, and is connected to the beam leads 12 and 12a by wiring bonding.

Further, four sectoral passing windows 15b gathering together in a ring-like configuration are perforated at central portions of the insulating substrate 14a formed from an opaque thin resin plate or the like.

The light receiving element and the light emitting element are positioned making use of pilot holes such that the axes of the light receiving element and the light emitting element may be aligned with each other across the insulating substrate 14a on the rear faces to the mounting faces of the light receiving element and the light emitting element, and are joined together, for example, by adhesion.

The pilot holes are formed such that, even if one of the lead frames is placed upside down, the coordinates of them coincide with each other similarly as in the example described hereinabove, and working also at later steps can be performed with the two lead frames placed one on the other.

The later manufacturing process of the transmitter-receiver 30a of the present example is substantially such as described below.

The light receiving element 8 is encapsulated. The encapsulation section 17 of a transparent resin is formed, for example, by outsert molding. While the opposing face of the encapsulation section 17 to the POF is formed as a flat face, it may otherwise be formed in a convex lens shape. A fourth prism reflecting face 11c is formed on a circular truncated conical face of an outer periphery of the encapsulation section 17.

The fourth prism reflecting face 11c may be formed as a face having a reflecting effect by vapor deposition, plating, printing or the like, or a circular truncated conical reflecting plate of a metal material or the like may be arranged along the outer periphery circular truncated conical face of the encapsulation section 17 and secured upon molding of the lower prism 10 and the upper prism 10a at the next step. If the upper prism 10a is formed separately and fitted on the encapsulation section 17 as shown in FIG. 3, then also it is possible to form the reflecting face on the inner and outer faces of the upper prism 10a by plating or the like.

Generally, the lower prism 10 and the upper prism 10a are formed at the same time by pouring in transparent resin by outsert molding. The transparent resin flows also into the passing windows 15b of the insulating substrate 14a to integrate the lower prism 10 and the upper prism 10a such that there exists no contacting face on the light path on the transmission side.

The prism reflecting face 11 and the second prism reflecting face 11a of the lower prism 10 may be formed, for example, as deposited faces or plated faces of metal, and if total reflection can be anticipated, then the glossy faces in a molded state may be used as they are.

The circular truncated conical face of the outer periphery of the upper prism 10a is formed as a deposited face or a plated face of metal.

The outer periphery of the lead frame is cut and the beam leads 12 and 12a and the beam lead GNDs 13 and 13a are separated from each other, and all of the steps are completed therewith.

In the transmitter-receiver 30a, reception light 7 emitted from the POF is converged by the spherical face portion of the POF end face 2 as shown in FIGS. 4A to 4B and received efficiently by the light receiving element 8. This is similar to that in FIGS. 2A and 2B.

On the other hand, transmission light 5 emitted from the light emitting element 9 (downwardly in the figure) is reflected by a conical prism reflecting face 11 formed at a central portion of the lower prism 10 and having a concave curved face so that it is emitted substantially horizontally and uniformly in all circumferential directions.

Further, the transmission light 5 is reflected by the second prism reflecting face 11a having a circular truncated conical shape and changes its advancing direction to the upward direction, and then passes through the ring-shaped passing windows 15b formed in the insulating substrate 14, whereafter it comes to the upper prism 10a and is reflected by a third prism reflecting face 11b and further reflected by the fourth prism reflecting face 11c. Thus, the transmission light 5 is directed upwardly in the form of a ring while converging a little and then enters the POF through the outer periphery of the lens-shaped end face 2 of the POF (in a substantially ring-like configuration over the overall circumference). Also in this instance, a flux of light uniformly distributed point-symmetrically with the axial line of the POF is introduced into the POF.

The transmission light 5 cannot enter through the fourth prism reflecting face 11c and does not have an influence on the light receiving element 8.

Further, transmission reflection light 6 of the transmission light 5 from the lens-shaped end face 2 of the POF is most reflected by the outer periphery of the end face 2 and does not reach the light receiving element 8.

Also here, by aligning the axial line of the POF, the axis of the light receiving element and the axis of the light emitting element with each other and keeping the sensitivity of the light receiving element at the highest level and besides condensing a flux of light emitted from the light emitting element in a ring-like distribution by means of a prism such that the transmission light distributed point-symmetrically with the axial line of the POF is introduced into the POF through the outer periphery of the POF similarly as in the preceding example, it is possible to prevent crosstalk between transmission and reception.

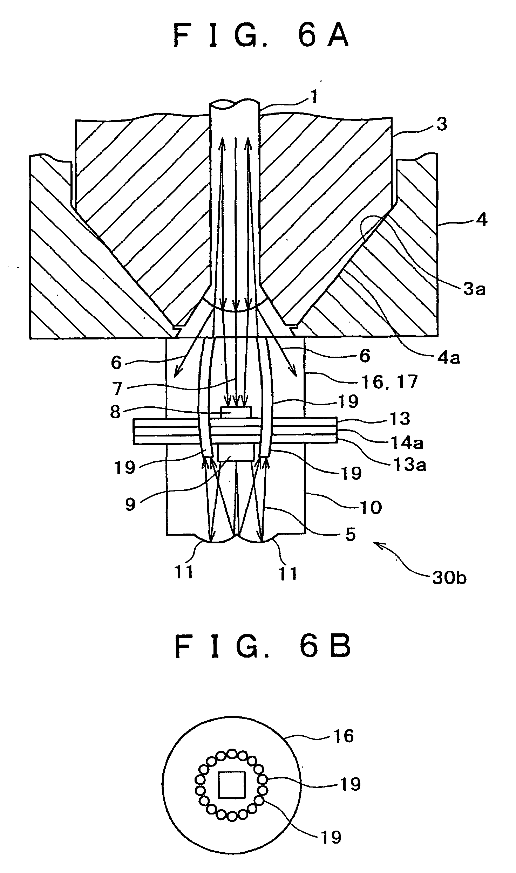

Further, a transmitter-receiver 30b of a further embodiment of the present invention is described with reference to FIGS. 6A and 6B. FIG. 6A is a sectional view taken along a plane including an axial line of a POF, and FIG. 6B is a sectional view taken perpendicularly to the axial line of the POF in the proximity of a spacer 16.

An optical fiber (single-core POF) 1 is fixedly attached to a central portion of a connector plug 3 and an (outer) tapered face 3a at an end of the plug and an (inner) tapered face 4a at the most interior portion of a hole portion of the receptacle 4 are contacted with each other to position the axial line of the POF at a predetermined position of the receptacle 4 similarly as in the preceding examples.

The transmitter-receiver 30b is attached at a rear portion of the receptacle 4. The transmitter-receiver 30b includes a substrate having a light receiving element 8 and a light emitting element 9 mounted on the front and the back thereof, a lower prism 10 for both reflecting transmission light 5 and encapsulating the light emitting element 9, a spacer 16 serving also for encapsulation of the light receiving element 8, light introducing fibers 19 for which an optical fiber is used, and so forth.

The light receiving element 8 is formed from a photodiode, a phototransistor or the like similarly as in the preceding examples, and the light emitting element 9 is formed from an LED.

The light receiving element 8 is mounted on a beam lead GND 13 such that the highest sensitivity axis thereof is aligned with the axial line of the POF so that the light receiving element 8 may receive reception light 7 emitted from the POF efficiently, and is connected to the outside through beam leads 12. The light receiving element 8 is encapsulated in a transparent encapsulation section 17 substantially similarly as in the preceding examples.

The lead frames on which the light receiving element 8 and the light emitting element 9 are mounted are similar to those, for example, shown in FIG. 5D. A large number of holes into which the light introducing fibers 19 are to be inserted individually are perforated in an opaque insulating substrate 14a. The lead frames having the light receiving element 8 and the light emitting element 9 mounted individually thereon and bonded to the beam leads 12 and 12a by wire bonding are adhered in a back-to-back relationship to each other with the insulating substrate 14a interposed therebetween.

Then, the light introducing fibers 19 are inserted individually into the holes of the insulating substrate 14a. A POF or an equivalent part can be used for the light introducing fibers 19.

The lower prism 10 and the spacer 16 are molded at. the same time, for example, by outsert molding. Also encapsulation of the light receiving element 8 and the light emitting element 9 and fixation of the light introducing fibers 19 are performed.

If necessary, vapor deposition or plating working is performed for the prism reflecting face 11 to form the prism reflecting face 11 as a reflecting face.

It is to be noted that, depending upon the refractive index of the resin for the lower prism 10 and the spacer 16, not an optical fiber having a core and a clad but only a core member may possibly be used for the light introducing fibers 19.

The outer periphery of the lead frame is cut and the beam leads 12 and 12a and the beam lead GNDs 13 and 13a are separated from each other, and all of the steps are completed therewith.

In the transmitter-receiver 30b, the reception light 7 emitted from the POF is converged by the spherical face portion of the POF end face 2 as shown in FIGS. 6A and 6B and received efficiently by the light receiving element 8. This is similar to that in the two preceding examples.

On the other hand, the transmission light 5 emitted from the light emitting element 9 (downwardly in the figure) is reflected by a prism reflecting face 11 formed at a central portion of the lower prism 10 and having a ring-shaped convex curved face such that it is introduced into the light introducing fibers through the incoming side (lower end) end faces of the light introducing fibers. It may be considered that the transmission light 5 is introduced with a substantially equal illuminance into the plurality of light introducing fibers 19 arranged along a circle.

The transmission light 5 introduced along the light paths of the light introducing fibers 19 goes out from the outgoing side (upper ends) of the light introducing fibers. Then, the transmission light 5 enters the POF through the outer periphery of the end face 2 of the POF (in a substantially ring-like configuration over the overall circumference). Also in this instance, a flux of light uniformly distributed point-symmetrically with the axial line of the POF is introduced into the POF.

Further, transmission reflection light 6 of the transmission light 5 from the lens-shaped end face 2 of the POF is most reflected by the outer periphery of the end face 2 and does not reach the light receiving element 8. Also here, by aligning the axial line of the POF, the axis of the light receiving element and the axis of the light emitting element with each other and keeping the sensitivity of the light receiving element at the highest level and besides condensing a flux of light emitted from the light emitting element in a ring-like distribution by means of a prism such that the transmission light distributed point-symmetrically with the axial line of the POF is introduced into the POF through the outer periphery of the POF similarly as in the preceding examples, the arrangement of the baffle and so forth is facilitated and it is possible to intercept the transmission light and the reflected light of the transmission light with certainty to prevent crosstalk between transmission and reception.

The cases wherein an LED is used as the light emitting element are described hereinabove. Also it is possible to use a laser light emitting element (LD) of a semiconductor laser or the like for the light emitting element.

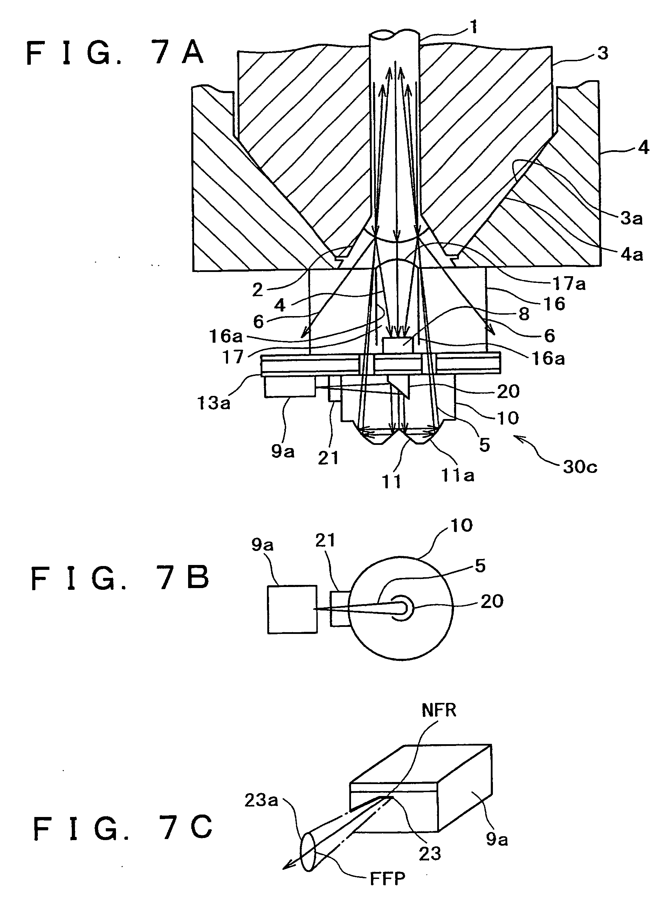

Various embodiments are described with reference to FIGS. 7A to 7C, 8A to 8B, and 9A to 9B. FIGS. 7A, 8A and 9A are sectional views of an end of a POF plug and a transmitter-receiver taken along a plane including the axial line of a POF, and FIGS. 7B, 8B and 9B are bottom plan views in the proximity of a laser light emitting element. It is to be noted that FIG. 7C is a schematic view illustrating an aspect ratio based on an intensity distribution of a semiconductor laser.

FIGS. 7A to 7C correspond to FIGS. 2A to 2B wherein an LED is used for the light emitting element. Although the shape of a substrate in plan is not shown in figures following FIGS. 7A to 7C, since the LED is replaced with an LD, a lead frame having a form similar to that shown in FIGS. 5A to 5F is used although only the land positions of the beam leads 12a and the beam lead GNDs 13a on the light emitting element side are different.

Since the configurations of portions in the proximity of fitting portions of a POF 1 with the plug 3 and the receptacle 4 and the light receiving element side are quite similar to those of FIGS. 2A to 2B, and therefore, detailed description of them is omitted and only the light emitting side for which an LD is used is described.

The LD 9a is attached to a beam lead GND 13a and has a terminal or terminals connected to a single or a plurality of beam leads 12a. Laser light is emitted in parallel to the beam lead 13a from the LD 9a and makes transmission light 5, and the transmission light 5 enters a 45° prism 20 securely mounted on the beam lead GND 13a on an extension line of the axial line of the POF 1. Then, the advancing direction of the transmission light 5 is bent perpendicularly to the lower direction by the 45°. prism 20, and then the transmission light 5 is reflected and directed upwardly by the prism reflecting face 11 and the second prism reflecting face 11a of the lower prism. 10 so that it is introduced into the lens-shaped end face 2 of the POF 1.

Transmission reflection light 6 of the transmission light 5 reflected by the lens-shaped end face 2 of the POF 1 advances outwardly and does not have an influence on the light receiving element 8 and besides is intercepted fully by the baffle 16a in a similar manner as in the transmitter-receiver 30 shown in FIGS. 2A and 2B.

An LD chip placed on the market in most cases has such a form that it is of the type placed horizontally as shown in FIGS. 7A to 7C and an outgoing slit for laser light extends in parallel to a substrate. As shown in FIG. 7C, in the neighborhood (NFR) of an outgoing slit, (the intensity of) laser light exhibits a horizontally elongated ellipse parallel to the slit, and at a remote place (FFP), the laser light exhibits a vertically elongated ellipse conversely. The ratio between the major axis and the minor axis of an ellipse is called aspect ratio.

This aspect ratio is considerably high (for example, reaches 2 to 3), and if it is intended to use the laser light as the transmission light 5, the laser light must be deformed into light of a circular shape. Accordingly, aspect ratio changing means 21 is inserted intermediately of the light path to convert the shape of the light from an ellipse into a circular shape.

As particular aspect ratio changing means, for example, a concave cylindrical lens may be interposed in the light path to correct the shape of the light into a circular shape. Even if a new cylindrical lens is not added, if a concave face is provided on the outer periphery of the lower prism 10 which corresponds to the light path of the transmission light 5, then this performs the same action. Or, even if the reflecting face of the 45° prism 20 which bends laser light perpendicularly is formed as a concave face, similar correction can be achieved.

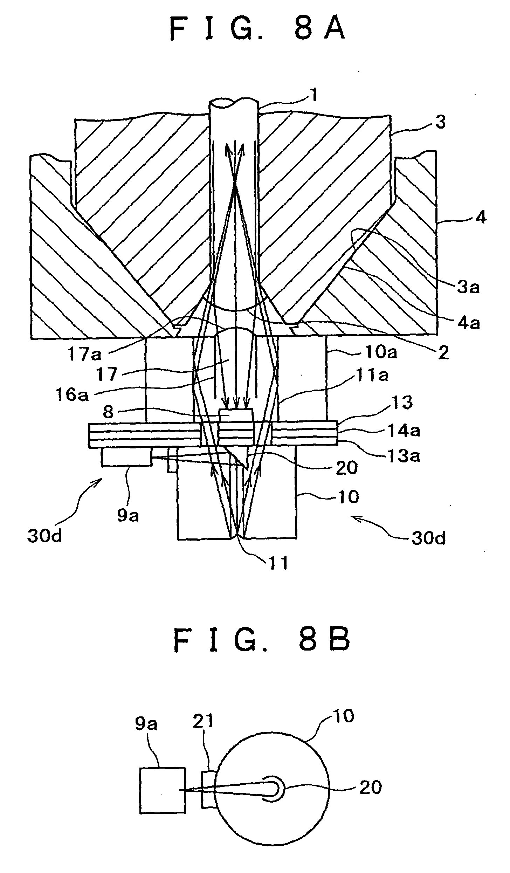

The arrangement of FIGS. 8A to 8B is ready well for a case wherein the angle of diffusion of emitted laser light is small.

An LD 9a is attached in a similar manner as in FIGS. 7A to 7C, and transmission light 5 emitted from the LD 9a is introduced into a 45° prism 20 fixed to a beam lead GND 13a on an extension line of the axial line of a POF 1 and bends its advancing direction perpendicularly to the downward direction. Then, the transmission light 5 is reflected and directed upwardly by a prism reflecting face 11 of a lower prism 10 and then reflected and converged in the inside of a cylindrical second prism reflecting face 11a, whereafter it is introduced into a lens-shaped end face 2 of the POF 1.

At the lens-shaped end face 2 of the POF 1, the transmission light 5 enters substantially perpendicularly into the lens-shaped end face 2 within a small range. Transmission reflection light 6 does not have an influence on the light receiving element 8 and is further intercepted fully by the baffle 16a.

The transmitter-receiver 30d shown in FIGS. 8A to 8B is manufactured by a method similar to that described hereinabove, but in order to reduce the contacting faces of different parts in the light path of the transmission light 5, it is advantageous to form the lower prism 10 and the encapsulation section 17 (of the light receiving element 8) integrally by outsert molding.

The baffle 16a is formed from a separate part of a cylindrical configuration molded upon outsert molding and is fitted with the upper prism 10a produced separately (which corresponds to a spacer from its object of use).

The cylindrical second prism reflecting face 11a may be formed as a part of a cylindrical shape made of metal or the like or may be formed as a reflecting face by performing a vapor deposition or plating process for an outer cylindrical portion of the encapsulation section 17 or an inner cylindrical portion of the upper prism 10a.

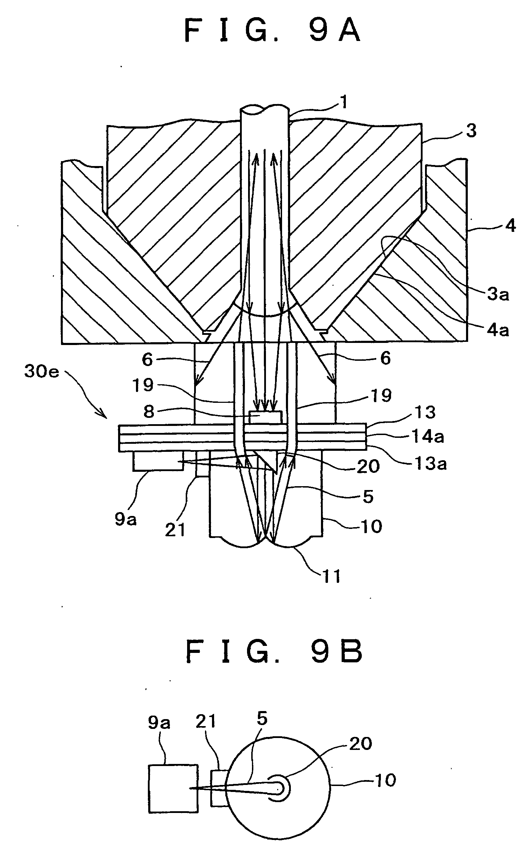

A transmitter-receiver 30e shown in FIGS. 9A to 9B may be considered as an arrangement wherein the light emitting element 9 of FIGS. 6A to 6B is replaced by an LD 9a, and transmission light 5 is introduced into the lens-shaped end face 2 of the POF 1 through the inside of the light introducing fibers 19. In particular, the LD 9a is attached in a similar manner as in FIGS. 7A to 7C, and the transmission light 5 emitted from the LD 9a enters the 45° prism 20 fixed to the beam lead GND 13a on an extension line of the axial line of the POF 1 and bends its advancing direction perpendicularly to the downward direction. Further, the transmission light 5 is reflected and directed upwardly by the prism reflecting face 11 formed at a central portion of the lower prism 10 and having a ring-shaped convex curved face, and enters the insides of a plurality of light introducing fibers 19 arranged on a circle.

The transmission light 5 introduced along the light paths of the light introducing fibers 19 goes out from the outgoing side (upper ends) of the light introducing fibers. Then, the transmission light 5 enters the POF through the outer periphery of the end face 2 of the POF (in a substantially ring-like configuration over the overall circumference). Also in this instance, a flux of light uniformly distributed point-symmetrically with the axial line of the POP is introduced into the POF similarly as in the case of FIGS. 6A to 6B.

Further, transmission reflection light 6 of the transmission light 5 from the lens-shaped end face 2 of the POF is most reflected by the outer periphery of the end face 2 and does not reach the light receiving element 8. Similarly as in the preceding examples, by aligning the axial line of the POF, the axis of the light receiving element and the axis of the light emitting element with each other and keeping the sensitivity of the light receiving element at the highest level and besides condensing a flux of light emitted from the light emitting element in a ring-like distribution by means of a prism such that the transmission light distributed point-symmetrically with the axial line of the POF is introduced into the POF through the outer periphery of the POF similarly as in the preceding examples, crosstalk between transmission and reception can be prevented.

Particular examples where an LD is used are described above. Although the LD is not arranged on the axial line of the POF, since the 45° prism 20 is arranged on an extension line of the axial line of the POF 1 to change the light path of the transmission light by 90°, the apparent light emitting source is placed on the axial line of the POF, and the same effect as that where the LD is placed on the axial line of the POF is achieved.

As described above, according to the present invention, since transmission light having a distribution point-symmetrically with an axial line of an optical fiber is used as a bi-directional transmitter-receiver in which an ordinary single-core optical fiber is used, even if vibration or a very small displacement originating from external force occurs with the optical fiber, a connector (plug or receptacle) or the like, the influence of the vibration or very small displacement upon the transmission characteristic can be reduced, and particularly in signal transmission between audio apparatus of high performances, sound quality deterioration can be prevented effectively.

Further, even if the insertion direction of the plug turns with respect to the receptacle, since the point-symmetrical transmission light is used, there is no variation in the transmission characteristic, and the plug and the receptacle are simplified in structure. Thus, the transmitter-receiver is superior in terms of the facility in handling upon connection, the cost, the convenience in use and so forth.

Particularly with a transmitter-receiver which uses an optical cable having a spherical end face, by introducing the transmission light into an outer periphery of the core of the optical cable, transmission reflection light can be directed outwardly, and the transmission light and the transmission reflection light can be intercepted precisely to prevent an influence of them upon the light receiving element.

Since the transmitter-receiver is structured such that reception light in the proximity of the POF is introduced into the light receiving element having the highest sensitivity, the variation of the intensity of the reception light against mechanical variation of the position, direction, bend or the like of the optical cable or the connector is small, and also the deterioration of the sound quality on the reception side by a disturbance can be prevented effectively.

Where the axial line of the POF, the light receiving element and the right emitting element are arranged on a substantially same straight line, since the intensity distributions of the transmission light and the reception light become point-symmetrical with respect to the axial line of the POF, the arrangement is influenced least by a connection error upon connection of the optical fiber to the connector, and also this prevents the deterioration of the transmission characteristic. Further, where the same transmission characteristic is maintained, an attaching operation of the POF to the connector plug is facilitated and the tolerance upon manufacture of connector parts such as the plug and the receptacle is increased, and in this regard, also the effect of reduction of the cost is high.

## Claims

1. An optical transmitter-receiver which comprises
a light reception section formed from a light receiving element for receiving reception light emitted from a single-core plastic optical fiber,
a light emission section formed from a light emitting element for emitting transmission light,
a substrate on which said light reception section and said light emission section are mounted, and
light path changing means formed on said substrate for changing a route of the transmission light so that the transmission light may be introduced into said plastic optical fiber, and
which is arranged in the proximity of a receptacle for holding, when a connector plug attached to an end portion of said plastic optical fiber is inserted into said receptacle, said connector plug at a predetermined position, **characterized in that**
the light reception of said light reception section and the light emission of said light emission section are performed on the same face side of said substrate, and
both of an intensity distribution when the transmission light enters said plastic optical fiber and a light reception sensitivity distribution of said light receiving element are symmetrical with respect to a point provided by a point on an axial line of said plastic optical fiber.

2. An optical transmitter-receiver according to claim 1, **characterized in that** the axial line of said plastic optical fiber, an axis of said light reception section and an axis of said light emission section are arranged on the same straight line.

3. An optical transmitter-receiver according to claim 1, **characterized in that** the intensity distribution of the transmission light is made greater at an outer peripheral portion than at a central portion of said plastic optical fiber by said light path changing means.

4. An optical transmitter-receiver according to claim 1, **characterized in that** said light path changing means is a reflecting face provided on a transparent prism.

5. An optical transmitter-receiver according to claim 1, **characterized in that** a baffle is provided on a light path of the reception light and around said light receiving element.

6. An optical transmitter-receiver according to claim 1, **characterized in that** said plastic optical fiber has a spherical end face.

7. An optical transmitter-receiver according to claim 1, **characterized in that** said light reception section includes a lens system provided on a light path of the reception light between an end face of said plastic optical fiber and said light receiving element for converging a flux of light.

8. An optical transmitter-receiver according to claim 1, **characterized in that** said light emission section includes a plurality of light introducing fibers for introducing the transmission light emitted from said light emitting element.

9. An optical transmitter-receiver according to claim 1, **characterized in that** conductors of said substrate on which said light emission section and said light reception section are mounted are electrically isolated from each other.

10. An optical transmitter-receiver according to claim 1, **characterized in that** conductors on which said light emission section and said light reception section form a light passing portion through which the transmission light passes.

11. An optical transmitter-receiver according to claim 1, **characterized in that** said insulating substrate inserted between said conductors has a transmission window through which the transmission light passes.

12. An optical transmitter-receiver according to claim 1, **characterized in that** an axis of said light emission section is arranged on the same straight line which passes the axial line of said plastic optical fiber and an axis of said light reception section.

13. An optical transmitter-receiver according to claim 1, **characterized in that** said light emitting element is a semiconductor laser, and a 45° prism is arranged on the same straight line as the axial line of said plastic optical fiber and an axis of said light receiving element such that an apparent light emitting source of the light path of the transmission light after the transmission light enters said 45° prism is arranged on the same straight line which passes the axial line of said plastic optical fiber and the axis of said light receiving element.

14. An optical transmitter-receiver according to claim 1, **characterized in that** said light emitting element is a semiconductor laser, and aspect ratio changing means is interposed in the light path of the transmission light between said semiconductor laser and said 45° prism.
